# EUROPEAN PATENT SPECIFICATION

(11) **EP 4 591 058 B1**
(45) Date of publication and mention of the grant of the patent: **18.11.2026**
(21) Application number: 23783526.9
(22) Date of filing: 21.09.2023
(51) Int. Cl.: G01N 30/86, G01N 30/88, G01N 30/72

(54) **QUANTIFICATION CONSISTENCY FOR SAMPLES ANALYSIS AND SAMPLES CLASSIFICATION**
KONSISTENZQUANTIFIZIERUNG FÜR PROBENANALYSE UND PROBENKLASSIFIZIERUNG
QUANTIFICATION DE LA COHÉRENCE D'ANALYSE D'ECHANTILLONS ET CLASSIFICATION DESDITS ÉCHANTILLONS

(30) Priority: 22.09.2022 US 202263408987 P
(43) Date of publication of application: 30.07.2025
(73) Proprietor: Waters Technologies Corporation, Milford, MA 01757 (US)
(72) Inventor: VISSERS, Johannes, 4835 KP Breda (NL); DENNY, Richard, Newcastle-under-Lyme, Staffordshire ST5 3PB (GB)
(74) Representative: Forresters IP LLP
(86) International application number: PCT/IB2023/059369
(87) International publication number: WO 2024/062425

(56) References cited:
- US-A1- 2020 377 956
- ANTOINE H. P. AMERICA ET AL: "Comparative LC-MS: A landscape of peaks and valleys", PROTEOMICS, vol. 8, no. 4, 1 February 2008 (2008-02-01), DE, pages 731 - 749, XP055253283, ISSN: 1615-9853, DOI: 10.1002/pmic.200700694
- PANG ZHIQIANG ET AL: "Using MetaboAnalyst 5.0 for LC-HRMS spectra processing, multi-omics integration and covariate adjustment of global metabolomics data", NATURE PROTOCOLS, NATURE PUBLISHING GROUP, GB, vol. 17, no. 8, 17 June 2022 (2022-06-17), pages 1735 - 1761, XP037922278, ISSN: 1754-2189, [retrieved on 20220617], DOI: 10.1038/S41596-022-00710-W
- CAROLINA MORETTO CARNIELLI ET AL: "Combining discovery and targeted proteomics reveals a prognostic signature in oral cancer", NATURE COMMUNICATIONS, vol. 9, no. 1, 5 September 2018 (2018-09-05), XP055595164, DOI: 10.1038/s41467-018-05696-2

## Description

### RELATED APPLICATIONS

This application claims priority to and benefit of US Provisional Application Serial No. 63/408,987, filed on September 22, 2022, and entitled "Sample Classification Workflow".

### FIELD OF THE TECHNOLOGY

The present disclosure relates to methods, techniques, and processes for sample classification.

### BACKGROUND

Classification of biological, chemical, environmental, and other samples is normally based on the presence/absence of signal using appropriate detection measurement techniques or the relative abundance or readout of a single sample or (a subset of) samples of a complete experiment using more advance analytical technologies such as liquid chromatography - mass spectrometry (LC-MS).

For most applications, such as clinical and forensic toxicology, environmental applications, and others, reporting a value or amount for a given compound based on the readout of a single feature, or as much as two, suffices as a result parameter for clinical diagnosis, environmental contamination, or product purity/quality in industrial manufacturing applications, *e.g.,* drugs, food, plastics, *etc.* Examples would include the detection and analysis of methyl malonic acid in plasma/blood for monitoring vitamin B12 status/deficiency [1] or pesticides in water matrices (ground, surface, *etc.* ) for agricultural application [2,3].

However, there is a need for a multiple reaction monitoring (MRM) based LC-MS system without the burden of manually analyzing every sample. There is also a need for MRM analysis, or targeted analysis derivatives, such as parallel reaction monitoring (PRM), that uses informatics for disease detection.

A prior art arrangement is known from ANTOINE H. P. AMERICA ET AL, "Comparative LC-MS: A landscape of peaks and valleys", PROTEOMICS, Vol. 8, No. 4, 01 February 2008 (2008-02-01), page 731-749. A second prior art arrangement is known from PANG ZHIQIANG ET AL, "Using MetaboAnalyst 5.0 for LC-HRMS spectra processing, multi-omics integration and covariate adjustment of global metabolomics data", 17 June 2022 (2022-06-17), Vol. 17, No. 8, page 1735-1761. A third prior art arrangement is known from CAROLINA MORETTO CARNIELLI ET AL, "Combining discovery and targeted proteomics reveals a prognostic signature in in oral cancer", NATURE COMMUNICATIONS, Vol. 9, No. 1, 05 September 2018 (2018-09-05).

### SUMMARY

These unmet needs are addressed by the present instrument and method of sample classification. The present invention is defined in the appended claims. The analysis of multiple features from one or more analytes associated with a given sample state providing quantification consistency and classification results with associated probabilities. The method can be readily extended to multiple sample state quantification consistency and classification results. For example, present methods can be used to classify SARS-CoV-2 infection status (positive/negative). In addition, the present methods can be readily extended to other viral infection diseases, such as Influenza A/B and Respiratory Syncytial Virus (RSV). In some examples, multiple sample states can be co-analyzed. Co-analysis may include individual classification and probabilities. For example, the method may classify or determine the probability of a disease state of each sample individually.

In general, the present technology is directed to the quantification consistency and classification of a sample based on multiple properties obtained from the interpretation of an instrument (e.g., MS or LC-MS) data for one of more sample states (e.g., disease, phenotype, etc.). Quantification consistency, as used herein, may include actual or relative amounts or concentrations.

In an embodiment, the present technology is directed to a mass spectrometer ("MS")/liquid chromatography-mass spectrometer ("LC-MS") instrument for classifying samples. The instrument uses a processing device for executing computer readable instructions for performing a method of classifying samples. The method of classifying samples includes collecting raw chromatographic data from one or more analytes of one or more samples and extracting features by quantifying consistency parameters from the raw chromatographic data by assigning criteria and determining probability ratios. In the feature extraction step, consistency and/or relative abundance of the analyte(s) is quantified ("quantification consistency"). The method then constructs a learning model (i.e., "model learning quantitation") based on the quantified consistency parameters by weighing the presence, absence, or modulation of one or more factors of the one or more samples against a decision criterion for positivity. The method then applies the learning model to an unknown sample to detect the presence, absence, or modulation of the one or more factors in the unknown sample.

In an alternative embodiment, the technology is directed to a method of classifying samples. The method workflow analyzes specific features obtained from a sample to indicate the presence or absence of a sample state. In some embodiments, the method of classifying sample data uses a mass spectrometer ("MS")/liquid chromatography-mass spectrometer ("LC-MS") instrument. The method includes collecting raw chromatographic data from one or more analytes of one or more samples; quantifying consistency parameters from the raw chromatographic data by assigning criteria and determining probability ratios; constructing a learning model quantitating step based on the quantified consistency parameters comprising weighing the presence, absence, or modulation of one or more factors of the one or more samples against a decision criterion for positivity; and applying the learning model to an unknown sample to detect the presence, absence, or modulation of the one or more factors in the unknown sample.

In some embodiments, the present technology can be used to clinically classify, i.e., indicate the presence or absence of a disease state, a sample using mass spectrometry by analyzing which analytes from the sample are present or determining the abundance or relative abundance of a signal of one or more analytes. For example, the present technology includes quantifying consistency and analyzing peptides from a protein sample.

In some embodiments, the present technology can be used for model learning quantitation by assigning criteria and determining specific features of the analyte that may be used for future diagnosis and detection. Probability ratios may then be calculated by analyzing the assigned criteria to produce model learning quantitation results.

In some embodiments, model learning quantitation involves nested sampling and/or a Markov Chain Monte Carlo ("MCMC") method.

In some embodiments, the model learning quantitation results may then be used to construct a learning model based on the model learning quantitation parameters by weighing the presence, absence, or modulation of one or more factors of the one or more samples against a decision criterion for positivity.

In some embodiments, the workflow analyzes two or more features (e.g., 2, 3, 4, 5, 6, 7, or more) that when detected together in a sample indicate the presence of the disease/infection state or sample conditions or describe more generically a sample or sample state.

In some embodiments, quantifying consistency parameters include quantifying peak detection results determined from the raw chromatographic data.

In some embodiments, peak detection results are determined from a ranking scheme of chromatographic peaks. The ranking scheme may include components of distance reflecting the degree of misfit of various aspects of the chromatographic peaks selected from the group consisting of consistency of retention time placement, peak width, and peak area. If the ranking scheme, which places chromatographic peaks in order from worst to best, is reliable, the measurements requiring adjustment or rejection should almost always appear above those that are immediately acceptable (i.e., semi-automated review).

In an embodiment, the present technology is directed to an instrument (e.g., MS or LC-MS) for classifying samples or quantifying consistency based on abundances (amount or concentration) and for model learning quantitation by assigning criteria and determining specific features of the analyte. The instrument includes a processing device for performing the method by executing computer readable instructions.

### BRIEF DESCRIPTION OF DRAWINGS

The technology will be more fully understood from the following detailed description taken in conjunction with the accompanying drawings, in which:
FIGS. 1A and 1B show schematics of an embodiment of training (FIG. 1A) and application (FIG. 1B) workflows in accordance with the present technology.
FIGS. 2A-2F show examples of feature detection and extraction consistency. FIG. 2A, FIG. 2B, and FIG.2C show peak consistency for an analyte. FIG. 2D, FIG. 2E, and FIG. 2F show additional consistency for another tested analyte (internal standard).
FIGS. 3A-3F show examples of inconsistency in feature detection and extraction. FIG. 3A, FIG. 3B, and3C show peak inconsistency for an analyte. FIG. 3D, FIG. 3E, and FIG. 3F show additional inconsistency for another tested analyte (internal standard).
FIG. 4 shows a flowchart of a model learning workflow.
FIG. 5 shows a flowchart of a model application workflow.

### DETAILED DESCRIPTION

In general, the present technology is directed to the classification of samples for detection by mass spectroscopy that are indicative of a disease state or physiological condition, e.g., viral infection (influenza, corona, rhinovirus, etc.), phenotype, etc., or a sample state, e.g., contaminated vs. non-contaminated, in general. The present technology provides processes in which data are peak detected, features extracted, a model built or applied, and samples classified.

The present technology resolves the challenge associated with manual review of sets describing a sample state based on multiple analytes and features because the decision metrics related to the acceptance criteria and/or optional quantitative reporting (i.e., quantification consistency) can be extracted or obtained from multiple features from multiple analytes for one or more disease states or sample conditions.

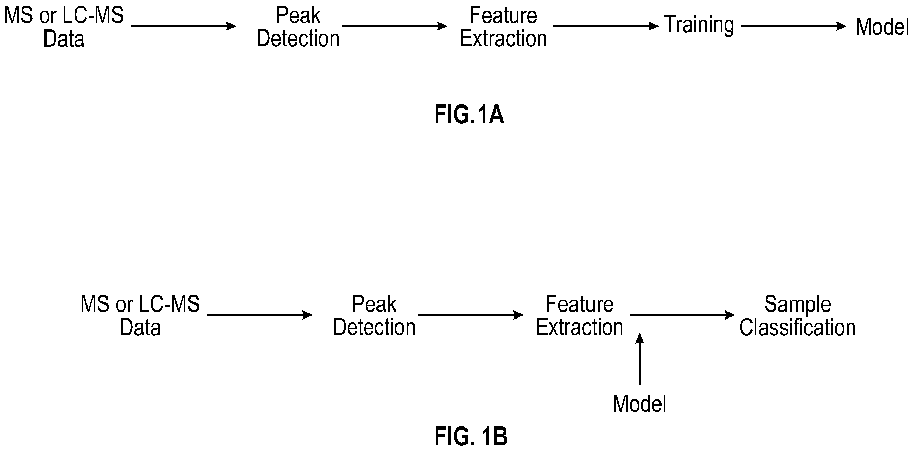

The workflow steps of the present technology can be generally summarized in the flowcharts of FIGS. 1A and 1B.

FIG. 1A shows a training workflow beginning with raw chromatographic data that is collected from an instrument such as an MS or LC-MS device. The instrument may contain a processing device that performs the method steps of peak detection, feature extraction, and training (model creation), which results in the construction of a learning model.

FIG. 1B demonstrates a model application workflow, which is similar to the workflow in FIG. 1A except that the workflow applies an existing learning model to the results from the feature extraction step to classify the sample.

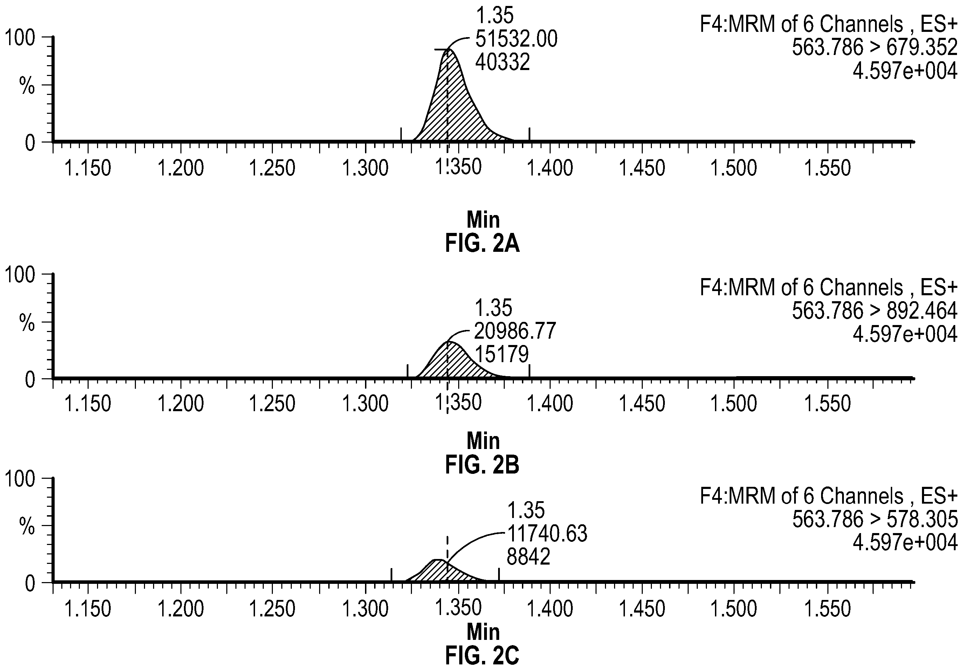

FIGS. 2A-2F show chromatographic peaks for analytes for feature detection and extraction consistency.

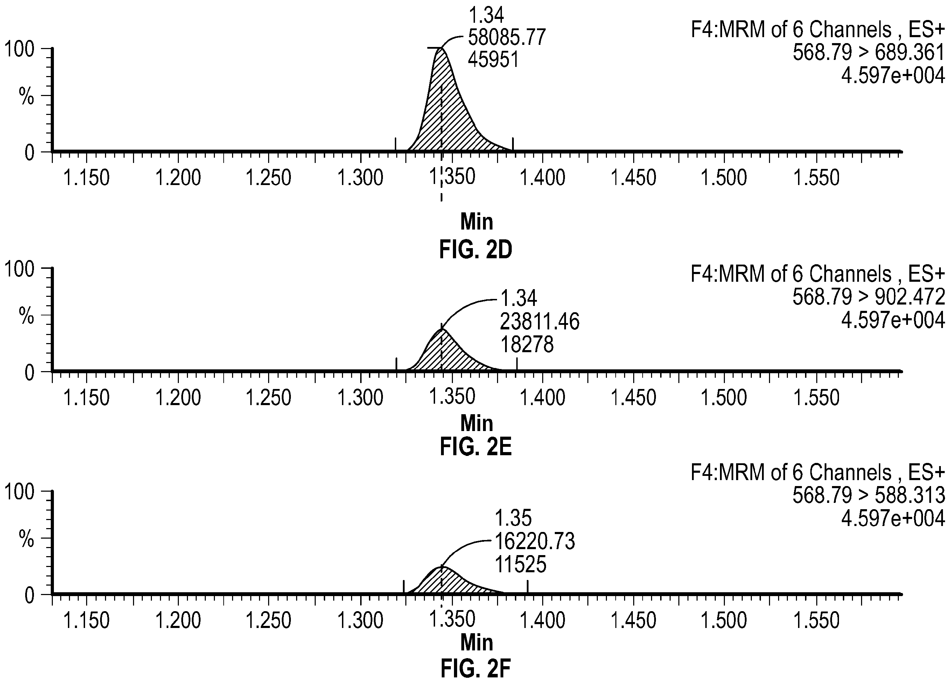

FIG. 2A, FIG. 2B, and FIG.2C show peak consistency for an analyte across three chromatographic peaks. FIG. 2D, FIG. 2E, and FIG. 2F show additional consistency for another tested analyte (internal standard) across three chromatographic peaks. As can be seen on each of FIGS. 2A-2C and 2D-2F, the peaks align, which demonstrates peak consistency.

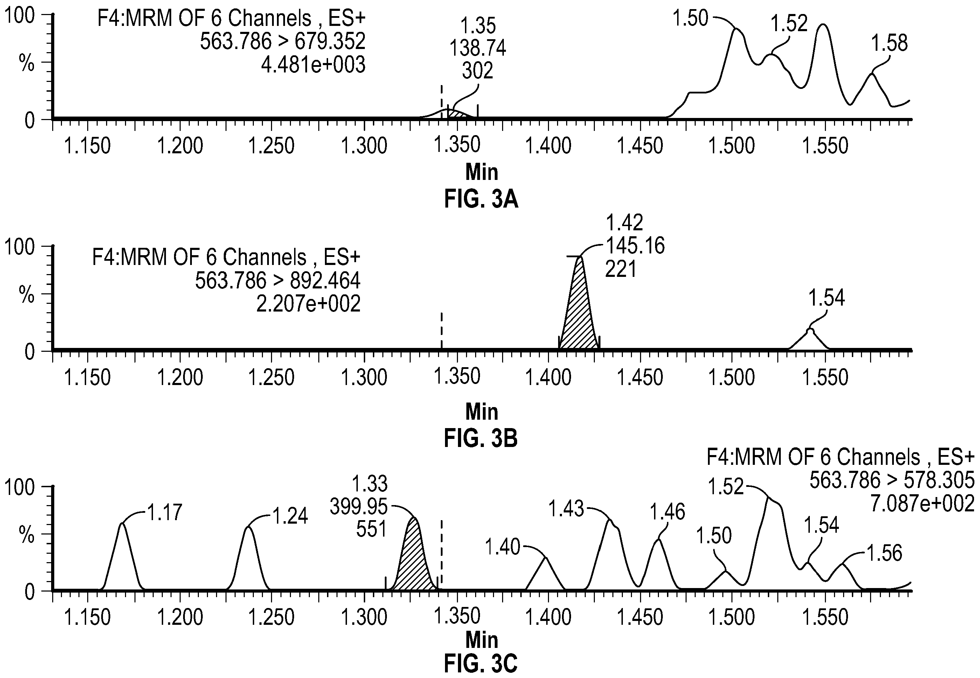

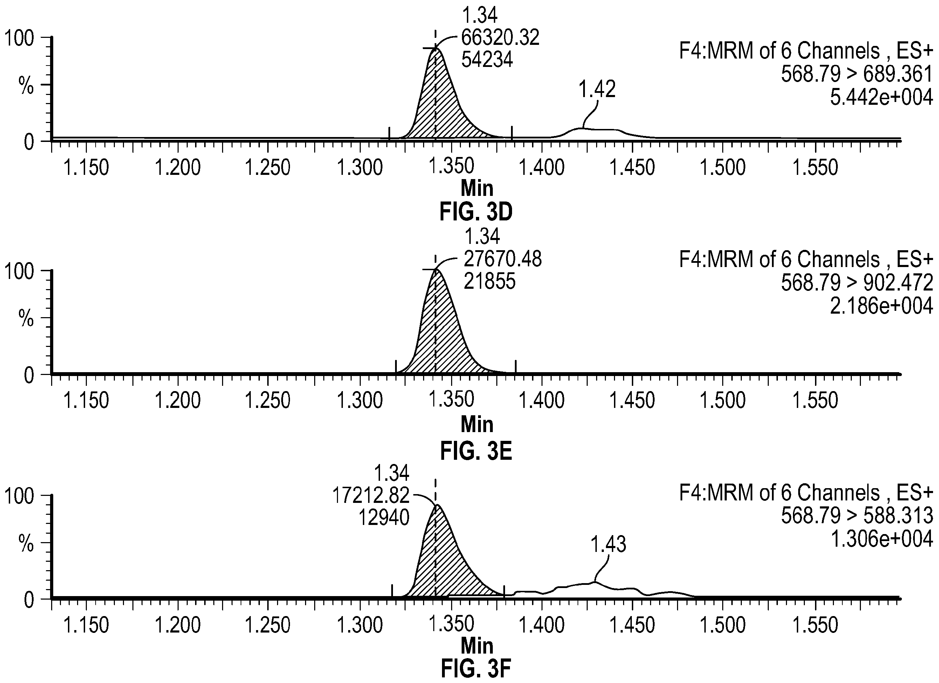

FIG. 3A, FIG. 3B, and FIG. 3C show peak inconsistency for an analyte across three chromatographic peaks. FIG. 3D, FIG. 3E, and FIG. 3F show additional inconsistency for another tested analyte (internal standard) across three chromatographic peaks. As can be seen when comparing FIGS. 3A-3C and 3D-3F, the peaks do not align, which demonstrates peak inconsistency.

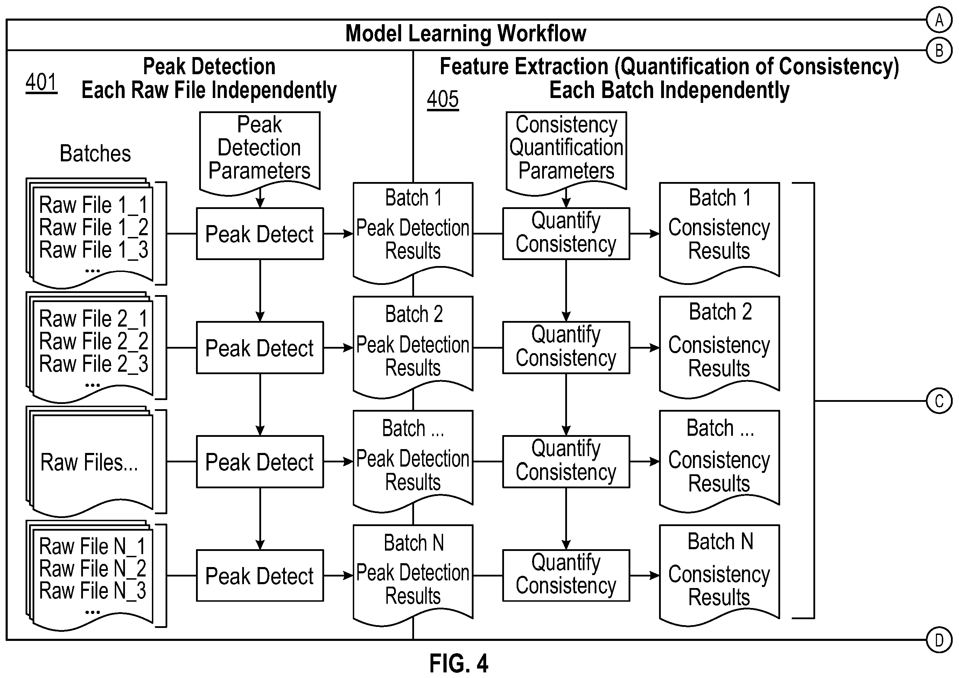

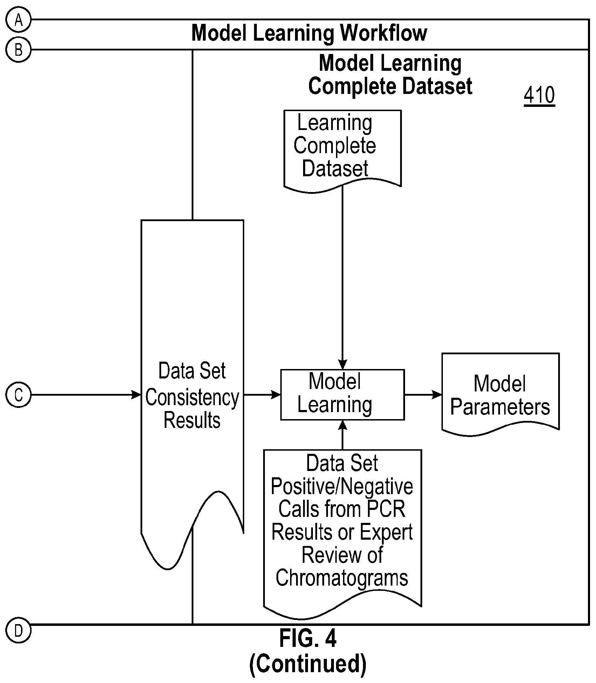

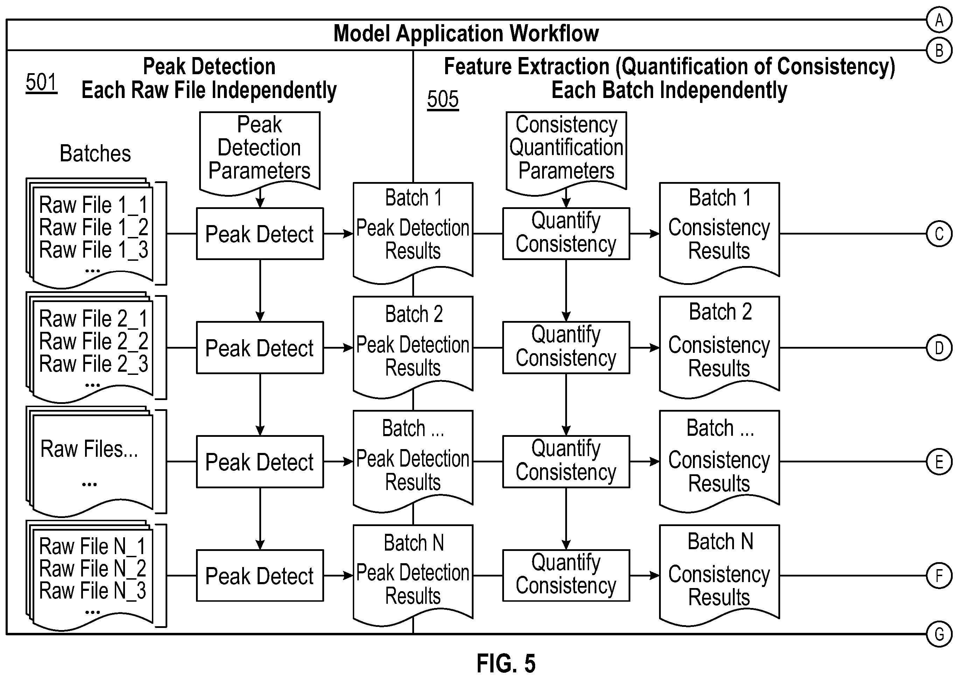

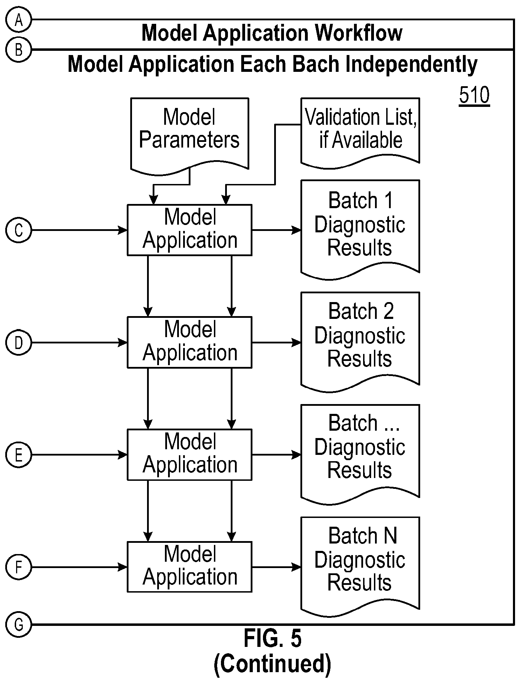

FIGS. 4 and 5 are examples of a model learning workflow and a model application workflow respectively.

In FIG. 4, the model learning workflow has three phases: peak detection (401), feature extraction (quantification consistency) (405), and the learning model (410). The model application of FIG. 5 shows a similar workflow except that the final phase is applying the learning model to classify the sample(s) instead of constructing the learning model as in FIG. 4.

The first step of the peak detection phase (401) is to collect raw chromatographic data. The raw chromatographic data are collected from one or more analytes of one or more samples. The method is not limited in the number of analytes/samples collected. Collection may be in the form of a batch that collects the data simultaneously or sequentially. In an example, the raw chromatographic data includes retention times and relative abundances.

In an example, the method collects raw chromatographic data from an analytical instrument. Preferably, the analytical instrument is a mass spectrometer ("MS") or a liquid chromatography-mass spectrometer ("LC-MS").

In an example, the analytical instrument (e.g., MS or LC-MS) from which raw data is collected also includes a processor that uses the sample classification method of the present technology. The instrument may collect a batch of samples/analytes either simultaneously or in sequence, which is advantageous given that the method is MRM-like, in that it may run multiple analyzes for multiple analytes.

As shown in the peak detection phase (401) in FIG. 4, once the raw chromatographic data is collected, peak detection is performed by using peak detection parameters.

One example of a peak detection parameter of the peak detection phase (401) is by using a ranking scheme. In particular, the present technology may reduce the burden of manual chromatogram review on the user by employing a ranking scheme for chromatographic peaks from the raw chromatographic data. If the ranking scheme, which places chromatographic peaks in order from worst to best, is reliable, the measurements requiring adjustment or rejection should almost always appear above those that are immediately acceptable (i.e., semi-automated review).

As part of the ranking scheme peak detection parameter of the peak detection phase (401), components of distance may be provided to aid interpretability of the ranking scheme. These components would reflect the degree of misfit of various aspects for the chromatographic peak measurement, e.g., consistency of retention time placement, peak width and peak area (including with respect to any ion ratio information), and peak asymmetry. Given the ranking and separate components of distance, the user or system would quickly be able to assess the point at which further review is unnecessary.

The ranking scheme peak detection parameter may use one or more ranking scheme parameters to optimize the ranking scheme. Examples of one or more ranking scheme parameters include batch center, sample center (for each sample), compound center (for each compound, relative to the sample center), variation of transition measurements from compound center, overall variance scale for measurement, precursor abundances (one per compound), transition efficiencies (one for each transition), and overall variance scale for measurement.

Using estimates of the ranking scheme parameter of the peak detection phase (401) a distance for each data point from the ideal is constructed. The estimates may be calculated at each iteration of an MCMC algorithm, and the squares of the distances averaged over the MCMC run to produce the final distances.

Once the ranking scheme data of the peak detection phase (401) is collected, the data is analyzed to determine specific peaks of the analyte (i.e., "peak detection"). The results from peak detection may then be used in the feature extraction phase (405).

In the feature extraction phase (405), consistency and/or relative abundance of the analyte(s) is quantified ("quantification consistency"). In some examples, abundances may be expressed as concentrations derived from peak integration. In some examples, a consistency value is a likelihood ratio.

Feature extraction (quantification of consistency) of the feature extraction phase (405) reduces the raw chromatographic data via peak detection to produce likelihood ratios for each analyte in each sample. In some embodiments, the consistency quantities/amounts are reduced using, e.g., a Markov Chain Monte Carlo (MCMC) approach.

The consistency results from the feature extraction phase (405) are then used to quantify a learning model ("learning model quantitation") (410). As part of the learning model quantitation, the method learns and cross-validates, which optimizes the parameters of a model or models of the prior probabilities of analytes given the presence, absence, or modulation of a factor against a decision criterion for positivity using a training set which has had criteria assigned to each sample. This creates an optimized model.

For example, the learning model quantitation constructs a model of LC-MS MRM data using Markov Chain Monte Carlo (MCMC) methods. The Good-Bad data model approach is used to assign peaks either peaks to an ON set governed by sub-model types A and B, or OFF data governed by sub-model type C: type A for measurements of ON peaks, such as retention time or peak width, that should have no systematic variation between MRM transitions of a compound in particular sample; type B for measurements of ON peaks associated with abundance, such as peak height or area, that do have a systematic variation between MRM transitions of a compound in a particular sample (due to different efficiencies of the fragmentation of precursor to product); type C model is used for all the attributes of OFF peaks. This may be a simple uniform model. Distances are defined in terms of central estimates of the parameters of the type A and type B models for peaks in the ON group.

As part of the learning model phase (410), peak detection results from the peak detection phase (401) and consistency results from the feature extraction phase (405) may be used for model learning quantitation by assigning criteria and determining specific features of the analyte that may be used for future diagnosis and detection. Probability ratios may then be calculated by analyzing the assigned criteria to produce model learning quantitation results.

In an example, learning model quantitation involves nested sampling and/or a Markov Chain Monte Carlo ("MCMC") method. The method is not limited in model learning quantitation methods and may include additional machine learning methods. Model learning quantitation may further involve cross-validation such as, for example, leave-one-out cross-validation.

In an example, the learning model quantitation of the learning model phase (410) constructs a model that will provide distances for each measurement from a central estimate and probabilities of "goodness", i.e., of the measurement belonging to a consensus of good measurements. This consensus might come from the analysis of an individual batch or may also be influenced by historical/training data from previous acquisitions.

The model learning quantitation results may then be used to construct a learning model (410) based on model learning quantitation parameters by weighing the presence, absence, or modulation of one or more factors of the one or more samples against a decision criterion for positivity.

Once a learning model is constructed, the model can then be applied to unknown analytes to detect the presence, absence, or modulation of the one or more factors in the unknown sample. Thus, in some embodiments, the present technology uses a model application workflow as shown in FIG. 5.

The workflow of FIG. 5 has a peak detection phase (501) and feature extraction phase (505) that are similar to the peak detection phase (401) and feature extraction phase (405) in FIG. 4. However, the model application workflow of FIG. 5 is distinct from FIG. 4 in that the model application phase (510) of FIG. 5 replaces the learning model phase (410) of FIG. 4. Specifically, the model application phase applies the optimized model to unknown sample data. The optimized model is applied to the extracted features of unknown samples to detect the presence, absence, or modulation of a factor describing the state of a sample. In an embodiment, the application of the optimized model detects the presence or absence of a disease states such as a virus or request human review of the data.

In an example, the one or more factors describe the presence or absence of a disease state or multiple disease states. Disease states include, for example, viral infections and cancers.

Viral infections are not limited and include, for example, SARS-CoV-2, HIV, influenza, and other strains affecting humans and other animals.

Cancers are not limited and include, e.g., tumor cells from non-malignant and malignant cancers in humans and other animals.

The analytes of the sample are not particularly limited in chemical structure. In an example, the analytes may be one or more endogenous peptides. Preferably, the analyte includes peptides from cellular samples that either contain disease state or are free of a disease state. The sample may contain internal standards from which feature information is inferred. In a preferred example, the sample includes isotopically labeled peptides.

Once a model is developed for a particular analyte, the method may be applied to other similar analytes. Purely as a quality check, experts may compare MRM chromatograms with their own manual interpretations to validate method results.

### EXAMPLE 1: COVID-19 ANALYSIS

Samples from COVID-19 patients were collected and peptide analytes from samples were analyzed using the classification method. Based on the method, a model threshold was formulated. Manual interpretation of each peptide in the MRM data was compared with the results of applying the method to confirm detection consistency.

Quantification consistency parameters included retention time (t_{R}), profile (peak shape), relative abundance, etc. The training data, including calibration samples and QCs, were peak detected and variations in retention times and relative abundances analyzed in the feature extraction process to produce likelihood values for the endogenous peptides. Calibration and QC samples, and internal standards may be given a higher prior probability of genuinely reflecting the expected retention times and relative abundances to aid this process. The peptide likelihoods, along with the known conditions of the samples, were used to optimize the parameters of a model, the predicted accuracy of the model being calculated by repeated rounds of optimization and leave-one-out cross-validation.

The learning model quantitation learned optimized weights associated with peptide combinations.

Nested sampling was used by randomly sampling within a likelihood constraint to produce a known statistical result. Likelihood values naturally define an iso-likelihood contour. A prior volume is the fraction of prior results contained within the likelihood iso-contour. The nested sampling steadily compresses a prior volume. As a prior volume shrinks geometrically and the likelihood increases, the posterior is traversed. Eventually, decreases in volume undermine any increase in likelihood and the algorithm terminates. Statistics of a state can be accumulated along the way by providing a particular weight.

Nested sampling steadily compresses the prior distribution to produce specific evidentiary criteria and information such as a log of posterior to prior compression ratio and a normalized posterior probability distribution. In an example, the nested sampling may be dynamic, which allows the algorithm to adapt to the shape of the posterior in real time, improving both accuracy and efficiency.

The method assigned a switch to each transition in each sample. If the switch is on, the transition is a group member, i.e., in the group of "good" transitions for the peptide in question; if the switch is off, the transition is considered as independently produced by the background (similar to outlier detection). The "on" state of the switch may also encode which peak is associated with the transition from a plurality of candidate peaks.

Once the probability ratio was found, the state of the switch may be re-sampled to any available state that obeys the current likelihood constraint.

Quantification consistency of peptide abundances and transition efficiencies include abundance of endogenous peptide in sample, labeled peptide in sample, efficiency of peptide transition, and Gaussian likelihoods for model areas against observed peak areas of "on" transitions.

Model learning quantitation were re-sampled by using a nested sampling likelihood constraint on a quadratic log-likelihood, which gives boundaries over which prior "on" a model learning quantity is acceptable.

Peptide probabilities were accumulated based on the following: at each sampling point of the nested sampling run, if any transitions belonging to the peptide is "on" then a value of 1 is multiplied by the nested sampling weight and is added to the probability value for the peptide. If all the transitions for the peptide are "off," then the "on" probability for the peptide at that sampling point is the prior probability that all transitions would be "off" given presence of the peptide. This is multiplied by the current nested sampling weight and added to the accumulated value.

The constructed model then connected the peptide likelihoods to probabilities of viral (i.e., SARS-CoV-2) presence/absence. Each alternative (viral presence/absence) has a prior probability on each configuration of peptide presences/absences. To optimize the model, a cost function can be established in advance. An arbitrary threshold for positivity can also be set in advance.

The model used decision optimization to minimize expected cost. Cost is evaluated on outcomes as proportions of negatives and positives, prevalence in population that is built into costs, specificity, etc. The optimization calibrates odds of positive samples against a decision threshold and can also set a review threshold below the positivity threshold.

Table 1 below shows an excerpt from the results after applying a model to a SARS-CoV-2 with learned parameters to QC and COVID-19 patient data. The threshold for indicating a positive samples state (SARS-CoV-2 infected) was an odds ratio of one (**). Expert review, i.e., an inconclusive result, was requested where the odds ratio was greater than 0.070577 (***), a value learned during training. Odds ratios less than this review threshold (*) indicated a negative sample state result for infection (SARS-CoV-2 infected). In this example, 3 features per analyte, with two analytes in total, were used.

**Table 1**

| **Sample** | **Covid-19 odds** |
|---|---|
| Neg_QC | 0.0340095* |
| Pos QC | 1.0043** |
| Solvent Blank | 0.018458* |
| Patient 1 | 0.0227256* |
| Patient 2 | 0.019211 * |
| Patient 3 | 0.0336331 * |
| Patient 4 | 0.0386951 * |
| Patient 5 | 1.0043** |
| Patient 6 | 0.0352765* |
| Patient 7 | 0.077185*** |
| Patient 8 | 0.0218494* |
| Patient 9 | 0.0250914* |

| | |
|---|---|
| * odds ratios less than threshold ** odds ratio of one *** odds ratio greater than threshold Threshold = 0.070577 | |

Table 2 shows the results of repeated leave-one-out learning and cross-validation cycles. In this process, one sample was omitted from the data set while training and its positive/review/negative status obtained using the learned model parameters accumulated into statistics.

The table shows the statistics that results from leaving out each sample from the training set in turn. The training was against the assignments made by experts who reviewed the LC-MS data (features) for each sample.

**Table 2**

| **Final Calls** | **Negative** | | **Positive** | |
|---|---|---|---|---|
| **Algorithm** | **#** | **%** | **#** | **%** |
| Negative | 182 | 96.8 | 3 | 1.9 |
| Positive | 1 | 0.5 | 145 | 94.2 |
| Review | 5 | 2.7 | 6 | 3.9 |
| Total | 188 | 100 | 154 | 100 |

Table 3 shows the results of reference assignment (independent interpretation of the LC-MS data) against the expert assignments used to generate Table 2.

**Table 3**

| **Final Calls** | **Negative** | | **Positive** | |
|---|---|---|---|---|
| **Lab Calls** | **#** | **%** | **#** | **%** |
| Negative | 182 | 97.3 | 4 | 2.6 |
| Positive | 5 | 2.7 | 150 | 97.4 |
| Total | 187 | 100 | 154 | 100 |

The results demonstrate that the method analyzes and produces a determination consistently and accurately when compared with manual analysis from experts who reviewed the LC-MS data (features) for each sample.

The method of the above example is not limited to the same number of features and analytes. Since the model involves learning, the method is capable of adapting to new analytes and becomes more precise with more samples.

### EXAMPLE 2: CIRCULATING ENDOGENOUS ANALYTES (DISEASE CLASSIFICATION)

In another example, the present technology quantifies consistency and/or classifies circulating amounts of multiple endogenous analytes in body fluids. For example, analytes may be biochemical compounds such as Vitamin D metabolites and steroidal hormones. Conditions associated with Vitamin D deficiency include respiratory tract infections, osteoporosis, and other chronic and metabolic diseases, such as obesity, metabolic syndrome, type 2 diabetes mellitus, cancer, rheumatoid arthritis, and inflammatory bowel disease. Vitamin D also exerts important actions in the clinical course of infectious and other acute diseases, particularly respiratory bacterial infections, tuberculosis, and virus infections, e.g., those generated by human immunodeficiency and SARS-CoV-2 viruses.

In this example, both 25-hydroxyvitamin-D3 and 25-hydroxyvitamin-D2 as circulating endogenous analytes are analyzed by using peak detection, quantifying consistency, and constructing/applying a learning model based on the methods disclosed herein. The results from this analysis are useful for determining a value (e.g., a concentration or amount) for multiple analytes in the samples. This information could be used for classifying the aforementioned conditions.

### EXAMPLE 3: THERAPEUTIC DRUG MONITORING (ABSOLUTE DETERMINATION)

In another example, the present technology quantifies and/or classifies absolute amounts of one or more therapeutic drugs as a method of therapeutic drug monitoring. For example, everolimus is a commonly used immunosuppressive agent with a variety of active mechanisms such as high inter- and intra-individual variability. Therefore, an accurate, analytically sensitive quantitative method using the present technology may play a role in researching the pharmacokinetic and pharmacodynamic effects of administration.

Here, the present technology applies a learning model of the present technology that is optimized by determining value(s) for therapeutic drug monitoring, including bias values that may influence measurement of hematocrit. The method of the present technology uses an LC-MS/MS instrument for the analysis of dried blood spot analysis of everolimus. The everolimus sample is analyzed by using peak detection, quantifying consistency, and applying the learning model based on the methods disclosed herein in order determine a value (e.g., a concentration or amount) for everolimus in the sample. This information could be used for therapeutic drug monitoring. Likewise, calculated bias values on medical decision levels showed that there was no clinical influence of hematocrit on the results.

### EXAMPLE 4: MULTI-DISEASE CASES

In another example, the present technology quantifies consistency and/or classifies the profile of multiple diseases from one or more analytes using the methods disclosed herein. By using peak detection, quantifying consistency, and applying the learning model based on the methods disclosed herein, one or more factors are detected in an unknown sample. These one or more factors can be used for determining a value (e.g., concentration or amount), which can be used for determining one or multiple disease states. In this example, an unknown sample was analyzed based on this method for determining both Influenza (A/B) and SARS-CoV-2 disease states. Thus, the present example was able to analyze multiple disease states with a single unknown sample.

Although the present technology has been described with reference to preferred embodiments, it will be understood by those skilled in the art that various changes in form and detail may be made without departing from the scope of the present invention as set forth in the accompanying claims.

### References

**[1]** E.M. Mineva, M. Zhang, D.J. Rabinowitz, K.W. Phinney, C.M. Pfeiffer, An LC-MS/MS method for serum methylmalonic acid suitable for monitoring vitamin B12 status in population surveys, Anal. Bioanal. Chem. 407 (2015) 2955-2964. https://doi.org/10.1007/s00216-014-8148-2.
[2] C. Campanale, C. Massarelli, D. Losacco, D. Bisaccia, M. Triozzi, V.F. Uricchio, The monitoring of pesticides in water matrices and the analytical criticalities: A review, TrAC Trends Anal. Chem. 144 (2021) 116423. https://doi.org/https://doi.org/10.1016/j.trac.2021.116423.
[3] J. Lundqvist, C. von Brömssen, A.K. Rosenmai, Å. Ohlsson, T. Le Godec, O. Jonsson, J. Kreuger, A. Oskarsson, Assessment of pesticides in surface water samples from Swedish agricultural areas by integrated bioanalysis and chemical analysis, Environ. Sci. Eur. 31 (2019) 53. https://doi.org/10.1186/s12302-019-0241-x.

## Claims

1. A mass spectrometer ("MS")/liquid chromatography-mass spectrometer ("LC-MS") instrument for quantifying and classifying samples comprising:
a processing device for executing computer readable instructions for performing a method of classifying samples, the method comprising:
collecting raw chromatographic data from one or more analytes of one or more samples,
wherein said LC-MS instrument is **characterized in that** the method performed by said processing device further comprises:
quantifying consistency parameters from the raw chromatographic data by assigning criteria and determining probability ratios;
constructing a learning model quantitation step based on the quantified consistency parameters comprising weighing the presence, absence, or modulation of one or more factors of the one or more samples against a decision criterion for positivity; and
applying the learning model to an unknown sample to detect the presence, absence, or modulation of the one or more factors in the unknown sample.

2. A method of classifying sample data from a mass spectrometer ("MS")/liquid chromatography-mass spectrometer ("LC-MS") instrument comprising:
collecting raw chromatographic data from one or more analytes of one or more samples, wherein said method is **characterized in that** it further comprises:
quantifying consistency parameters from the raw chromatographic data by assigning criteria and determining probability ratios;
constructing a learning model quantitation step based on the quantified consistency parameters comprising weighing the presence, absence, or modulation of one or more factors of the one or more samples against a decision criterion for positivity; and
applying the learning model to an unknown sample to detect the presence, absence, or modulation of the one or more factors in the unknown sample.

3. The instrument of claim 1 or the method of claim 2, wherein the one or more factors describe the presence, absence, or modulation of a disease state or multiple disease states.

4. The instrument of claim 1 or the method of claim 2, wherein the learning model quantitation step comprises a nested sampling and/or a Markov Chain Monte Carlo ("MCMC") method.

5. The instrument of claim 1 or the method of claim 2, wherein the raw chromatographic data is collected from a plurality of analytes that are run simultaneously or sequentially.

6. The method of claim 2, wherein the learning model quantitation step further comprises cross-validation.

7. The instrument of claim 1 or the method of claim 2, wherein the learning model quantitation step further comprises leave-one-out cross-validation.

8. The instrument of claim 1 or the method of claim 2, wherein the step of quantifying consistency parameters comprises quantifying peak detection results determined from the raw chromatographic data.

9. The instrument or method of claim 8, wherein the peak detection results are determined from a ranking scheme of chromatographic peaks.

10. The instrument or method of claim 9, wherein the ranking scheme comprises components of distance reflecting the degree of misfit of various aspects of the chromatographic peaks selected from the group consisting of consistency of retention time placement, peak width, and peak area.

11. The instrument of claim 1 or the method of claim 2, wherein the raw chromatographic data includes retention times and relative abundances.

12. The instrument of claim 1 or the method of claim 2, wherein the one or more samples comprise of endogenous and isotopically labeled analytes.

13. The instrument of claim 1 or the method of claim 2, wherein the method further comprises determining one or multiple disease states based on the presence, absence, or modulation of the one or more factors in the unknown sample.

## Patentansprüche

1. Massenspektrometer-Instrument ("MS"-Instrument)/Flüssigkeitschromatographie-Massenspektrometer-Instrument ("LC-MS"-Instrument) zum Quantifizieren und Klassifizieren von Proben, umfassend:
eine Verarbeitungsvorrichtung zum Ausführen computerlesbarer Anweisungen zum Durchführen eines Verfahrens zum Klassifizieren von Proben, das Verfahren umfassend:
Erfassen von chromatographischen Rohdaten von einem oder mehreren Analyten einer oder mehrerer Proben, wobei das LC-MS-Instrument **dadurch gekennzeichnet ist, dass** das Verfahren, das durch die Verarbeitungsvorrichtung durchgeführt wird, ferner umfasst:
Quantifizieren von Konsistenzparametern aus den chromatographischen Rohdaten durch ein Zuweisen von Kriterien und ein Bestimmen von Wahrscheinlichkeitsverhältnissen;
Konstruieren eines Lernmodell-Quantifizierungsschritts basierend auf den quantifizierten Konsistenzparametern, umfassend ein Abwägen des Vorhandenseins, des Fehlens oder der Modulation eines oder mehrerer Faktoren der einen oder der mehreren Proben gegen ein Entscheidungskriterium für Positivität; und Anwenden des Lernmodells auf eine unbekannte Probe, um das Vorhandensein, das Fehlen oder die Modulation des einen oder der mehreren Faktoren in der unbekannten Probe zu detektieren.

2. Verfahren zum Klassifizieren von Probendaten von einem Massenspektrometer-Instrument ("MS"-Instrument)/Flüssigkeitschromatographie-Massenspektrometer-Instrument ("LC-MS"-Instrument), umfassend: Sammeln von chromatographischen Rohdaten von einem oder mehreren Analyten einer oder mehrerer Proben, wobei das Verfahren **dadurch gekennzeichnet ist, dass** es ferner umfasst:
Quantifizieren von Konsistenzparametern aus den chromatographischen Rohdaten durch das Zuweisen von Kriterien und das Bestimmen von Wahrscheinlichkeitsverhältnissen;
Konstruieren eines Lernmodell-Quantifizierungsschritts basierend auf den quantifizierten Konsistenzparametern, umfassend das Abwägen des Vorhandenseins, des Fehlens oder der Modulation eines oder mehrerer Faktoren der einen oder der mehreren Proben gegen ein Entscheidungskriterium für Positivität; und Anwenden des Lernmodells auf eine unbekannte Probe, um das Vorhandensein, das Fehlen oder die Modulation des einen oder der mehreren Faktoren in der unbekannten Probe zu detektieren.

3. Instrument nach Anspruch 1 oder Verfahren nach Anspruch 2, wobei der eine oder die mehreren Faktoren das Vorhandensein, das Fehlen oder die Modulation eines Krankheitszustands oder mehrerer Krankheitszustände beschreiben.

4. Instrument nach Anspruch 1 oder Verfahren nach Anspruch 2, wobei der Lernmodell-Quantifizierungsschritt ein Nested-Sampling- und/oder ein Markov-Chain-Monte-Carlo-Verfahren ("MCMC"-Verfahren) umfasst.

5. Instrument nach Anspruch 1 oder Verfahren nach Anspruch 2, wobei die chromatographischen Rohdaten von einer Vielzahl von Analyten gesammelt werden, die gleichzeitig oder sequenziell laufen.

6. Verfahren nach Anspruch 2, wobei der Lernmodell-Quantifizierungsschritt ferner Kreuzvalidierung umfasst.

7. Instrument nach Anspruch 1 oder Verfahren nach Anspruch 2, wobei der Lernmodell-Quantifizierungsschritt ferner eine Leave-One-Out-Kreuzvalidierung umfasst.

8. Instrument nach Anspruch 1 oder Verfahren nach Anspruch 2, wobei der Schritt des Quantifizierens von Konsistenzparametern ein Quantifizieren von Peak-Detektionsergebnissen umfasst, die aus den chromatographischen Rohdaten bestimmt werden.

9. Instrument oder Verfahren nach Anspruch 8, wobei die Peak-Detektionsergebnisse aus einem Rangordnungsschema chromatographischer Peaks bestimmt werden.

10. Instrument oder Verfahren nach Anspruch 9, wobei das Rangordnungsschema Abstandskomponenten umfasst, die den Grad von Abweichung verschiedener Aspekte der chromatographischen Peaks widerspiegeln, ausgewählt aus der Gruppe, bestehend aus Konsistenz von Retentionszeitplatzierung, Peak-Breite und Peak-Fläche.

11. Instrument nach Anspruch 1 oder Verfahren nach Anspruch 2, wobei die chromatographischen Rohdaten Retentionszeiten und relative Häufigkeiten einschließen.

12. Instrument nach Anspruch 1 oder Verfahren nach Anspruch 2, wobei die eine oder die mehreren Proben endogene und isotopenmarkierte Analyten umfassen.

13. Instrument nach Anspruch 1 oder Verfahren nach Anspruch 2, wobei das Verfahren ferner das Bestimmen eines oder mehrerer Krankheitszustände basierend auf dem Vorhandensein, dem Fehlen oder der Modulation des einen oder der mehreren Faktoren in der unbekannten Probe umfasst.

## Revendications

1. Instrument de type spectromètre de masse (« MS »)/spectromètre de masse à chromatographie en phase liquide (« LC-MS ») pour quantifier et classer des échantillons comprenant :
un dispositif de traitement pour exécuter des instructions lisibles par ordinateur pour mettre en œuvre un procédé de classification d'échantillons, le procédé comprenant :
la collecte de données chromatographiques brutes à partir d'un ou plusieurs analytes d'un ou plusieurs échantillons, dans lequel ledit instrument LC-MS est **caractérisé en ce que** le procédé exécuté par ledit dispositif de traitement comprend en outre :
la quantification des paramètres de cohérence à partir des données chromatographiques brutes en attribuant des critères et en déterminant des rapports de probabilité ;
la construction d'une étape de quantification de modèle d'apprentissage sur la base des paramètres de cohérence quantifiés comprenant la pondération de la présence, de l'absence ou de la modulation d'un ou plusieurs facteurs du ou des échantillons par rapport à un critère de décision de positivité ; et l'application du modèle d'apprentissage à un échantillon inconnu pour détecter la présence, l'absence ou la modulation du ou des facteurs dans l'échantillon inconnu.

2. Procédé de classification de données d'échantillon provenant d'un instrument de type spectromètre de masse (« MS »)/spectromètre de masse couplé à une chromatographie en phase liquide (« LC-MS ») comprenant : la collecte de données chromatographiques brutes à partir d'un ou plusieurs analytes d'un ou plusieurs échantillons, dans lequel ledit procédé est **caractérisé en ce qu'**il comprend en outre :
la quantification des paramètres de cohérence à partir des données chromatographiques brutes en attribuant des critères et en déterminant des rapports de probabilité ;
la construction d'une étape de quantification de modèle d'apprentissage sur la base des paramètres de cohérence quantifiés comprenant la pondération de la présence, de l'absence ou de la modulation d'un ou plusieurs facteurs du ou des échantillons par rapport à un critère de décision de positivité ; et l'application du modèle d'apprentissage à un échantillon inconnu pour détecter la présence, l'absence ou la modulation du ou des facteurs dans l'échantillon inconnu.

3. Instrument selon la revendication 1 ou procédé selon la revendication 2, dans lequel le ou les facteurs décrivent la présence, l'absence ou la modulation d'un état pathologique ou de multiples états pathologiques.

4. Instrument selon la revendication 1 ou procédé selon la revendication 2, dans lequel l'étape de quantification du modèle d'apprentissage comprend un échantillonnage imbriqué et/ou une méthode de Monte-Carlo par chaîne de Markov (« MCMC »).

5. Instrument selon la revendication 1 ou procédé selon la revendication 2, dans lequel les données chromatographiques brutes sont collectées d'une pluralité d'analytes qui sont analysés simultanément ou séquentiellement.

6. Procédé selon la revendication 2, dans lequel l'étape de quantification du modèle d'apprentissage comprend en outre une validation croisée.

7. Instrument selon la revendication 1 ou procédé selon la revendication 2, dans lequel l'étape de quantification du modèle d'apprentissage comprend en outre une validation croisée de type leave-one-out.

8. Instrument selon la revendication 1 ou procédé selon la revendication 2, dans lequel l'étape de quantification des paramètres de cohérence comprend la quantification des résultats de détection de pics déterminés à partir des données chromatographiques brutes.

9. Instrument ou procédé selon la revendication 8, dans lequel les résultats de détection de pics sont déterminés à partir d'un schéma de classement de pics chromatographiques.

10. Instrument ou procédé selon la revendication 9, dans lequel le système de classement comprend des composantes de distance reflétant le degré d'inadéquation de divers aspects des pics chromatographiques choisis dans le groupe constitué par la cohérence du placement du temps de rétention, la largeur de pic et l'aire de pic.

11. Instrument selon la revendication 1 ou procédé selon la revendication 2, dans lequel les données chromatographiques brutes comprennent des temps de rétention et des abondances relatives.

12. Instrument selon la revendication 1 ou procédé selon la revendication 2, dans lequel le ou les échantillons comprennent des analytes endogènes et marqués isotopiquement.

13. Instrument selon la revendication 1 ou procédé selon la revendication 2, dans lequel le procédé comprend en outre la détermination d'un ou de plusieurs états pathologiques sur la base de la présence, de l'absence ou de la modulation du ou des facteurs dans l'échantillon inconnu.
